# EUROPEAN PATENT SPECIFICATION

(11) **EP 1 626 629 B1**
(45) Date of publication and mention of the grant of the patent: **24.01.2007**
(21) Application number: 04739258.4
(22) Date of filing: 19.05.2004
(51) Int. Cl.: A23G 3/00

(54) **HARD CARAMELS WITH SUPPORTED COLORS**
CARAMELBONBONS MIT FARBTRÄGERN
CARAMELS DURS CONTENANT DES COLORANTS ASSOCIES A DES SUPPORTS

(30) Priority: 19.05.2003 DE 10323602; 23.05.2003 US 472745 P
(43) Date of publication of application: 22.02.2006
(73) Proprietor: Südzucker Aktiengesellschaft Mannheim/Ochsenfurt, 68165 Mannheim (DE)
(72) Inventor: KOWALCZYK, Jörg, 67304 Eisenberg/Steinborn (DE); HASSLINGER, Bernd, 67316 Carlsberg (DE); BERNARD, Jörg, 67283 Albsheim (DE)
(74) Representative: Schrell, Andreas
(86) International application number: PCT/EP2004/005390
(87) International publication number: WO 2004/100673

(56) References cited:
- WO-A-97/26802
- WO-A-98/54977
- US-A- 5 637 344
- US-A1- 2003 077 362

## Description

The present invention relates to hard caramels which comprise at least one food color applied to a support.

Among confectionery products, hard caramels have developed in recent years to become one of the strongest product groups. Hard caramels have a hard and generally smooth surface and are therefore ideally suited to sucking. Besides their surface qualities and the taste, the visual appearance, in particular their being attractive to look at, and the consistency of hard caramels are of critical importance to their acceptance on the part of the consumer.

The filled or unfilled hard caramels known from the prior art are distinguished by great homogeneity in the consistency of their composition, particularly in the case of products which have not been pan-coated. If the hard caramels are colored with food colors, they also have a very homogeneous coloring.

From US-2003/077362 hard caramels are known which comprise flavoured discrete bodies.

The problem on which the present invention is based is to provide hard caramels which have a novel texture and which in respect in particular of their consistency are distinctly different from the prior art hard caramels and which also appear attractive to the consumer on the basis in particular of their visual appearance.

The present invention solves the technical problem on which it is based by providing a hard caramel comprising a hard caramel base and at least one food color applied to a support, the supported food color being inhomogeneously distributed in the hard caramel base.

In accordance with the invention, then, the support and/or the food colors attached or fixed to support particles within the hard caramel base of the hard caramel form embedded islets of color which are inhomogeneously distributed in the hard caramel or hard caramel base and are distinctly delimited from the hard caramel or hard caramel base. In accordance with the invention the hard caramels with the inhomogeneously distributed supported food color are distinguished by a texture, in particular a consistency, which differs considerably from the texture and consistency of conventional hard caramels. While the prior art hard caramels, particularly those which have not been pan-coated and are not filled, all have a uniform and extremely homogeneous glasslike consistency, the consistency of the hard caramels of the invention is not totally glasslike, owing to the colored support particles distributed inhomogeneously in the hard caramel mass. In contrast to the hard caramels known to date, the hard caramels of the invention, by virtue of the presence of the support particles, have a consistency which is characterized in that smaller or larger regions of considerably softer consistency, gumlike consistency for example, are scattered within the glasslike mass. Within the hard caramel, therefore, the colored support particles form regions which can be clearly delimited from the hard caramel base and which differ from the hard caramel base surrounding them by virtue of their entirely different consistency and also by virtue of their completely different color. This is achieved in accordance with the invention by firstly using, as support particles, substances which are not normally used for producing the hard caramel base and which have a completely different texture than the melted and cooled hard caramel mass. Secondly, moreover, in accordance with the invention and in a preferred embodiment, the colored support particles are introduced only after the melting of the hard caramel constituents, into the hard caramel melt while it is still hot, and the resultant mass is then immediately cooled, so that the support substances are not melted at all. The inhomogeneous consistency of the hard caramels of the invention that is achieved in this way is perceived by the consumer when consuming it, particularly when sucking it, as being extremely surprising but also very pleasant. The hard caramels of the invention, then, have a visual aspect which differs greatly from that of conventional hard caramels and which is perceived by the consumer to be extremely attractive.

In the context of the present invention the term "texture" refers to the entirety of the sensorial and rheological properties of a food or luxury foodstuffs. The texture is manifested not least in the mechanical parameters of the food or luxury foodstuffs, including in the case of hard caramels, for example, properties such as consistency, surface hardness and stickiness, and can be appraised by means of senses of touch and contact. The texture may also be understood as the combination of the physical appearance of a product and its sensorial and/or tactile manifestations, which are perceived by the consumer visually and during consumption. The texture influences all five senses of perception during the consumption of the product, with the sensorial perceptions changing in the course of the product's consumption. For example, at the beginning of consumption of the product, it is primarily the visual aspect of the product and subsequently the feel produced by the product on the lips that is perceived: In the course of actual chewing and/or sucking, mechanical properties of the product, in particular, such as elasticity, overall hardness and stickiness, are perceived within the oral cavity. Also perceived in particular in the course of chewing and/or sucking is the extent to which the product, after mixing with the saliva, is able to absorb moisture. There is also perception of the release of aroma from the product. After the end of the chewing process and/or sucking process, in other words after the product has completely disappeared from the oral cavity, there is a perception of whether aromas and/or sweeteners may have an after-effect in the mouth.

In the context of the present invention a "hard caramel" is a confectionery product which is produced by boiling a solution of sugars and/or sugar substitutes, particularly sugar alcohols, to a solids content of not less than 95% and which has a glasslike consistency. Hard caramels may further comprise substances which impart odor and flavor, which provide color and which influence the nature of the product, such substances possibly not being added until after the solution of sugars and/or sugar substitutes has been boiled. On account of the low residual water content, brought about in turn by the boiling process, hard caramels have a hard, glasslike consistency. Hard caramels may be produced in batches, continuously or by melt extrusion. Hard caramels may be in stamped or cast form, with or without a filling of, for example, glucose syrup or maltitol syrup. Hard caramels may have a pan-coated covering or else may be non-pan-coated. In the context of the present invention the "hard caramel base" is a hard caramel mass without a filling or a pan-coated covering, and distinguished by an entirely homogeneous glasslike consistency.

By a "support" or "carrier" is meant a substance which acts as a substrate and/or framework for the food colors used in accordance with the invention, it being possible for the food colors to be fixed or attached to the support or to impregnate it, so that the support or support particle formed therefrom is colored by the food color. In accordance with the invention a "support" is also in particular a substance which is able to form particles of a size which can be perceived by the naked eye; the particles of the support, which are preferably colored, have a distinctly different consistency than the cooled hard caramel base itself, even after a number of treatment steps: for example, coloring with a food color, heating to dry the solution comprising the carrier, introduction into the hot melt of the hard caramel base and/or after cooling in the melted hard caramel base. Preferably the carrier and/or particles formed therefrom have a nonglasslike consistency, which in particular is softer than the consistency of the hard caramel base. The consistency of the carrier particles can be, for example, gumlike, elastic, etc.. Therefore, particularly after coloring with a food color, the support and/or particles formed from it form regions which are distinctly delimited, three-dimensionally and colorwise, within the manufactured hard caramels, in particular within the hard caramel base.

In one preferred embodiment of the invention, therefore, the supported food color within the hard caramel forms regions which can be delimited three-dimensionally and colorwise from the hard caramel base.

In accordance with the invention the support for the food color is a water-swellable substance, the water-swellable substance being with particular preference a dry thickener or a film-former. In the context of the present invention a "thickener" or "thickening agent" is a substance, generally organic, of high molecular mass which is able to absorb liquids, water for example, and in doing so to swell. In the course of this process the thickener undergoes transition to a viscous true or colloidal solution and may form, for example, a gel or a mucilage. A thickener may therefore influence the consistency of a foodstuff, by forming a gel structure, for example. A thickener hence also influences the sensations which the texture of the hard caramel causes in the mouth, and modifies the mechanical properties of a hard caramel or of the hard caramel base, such as strength and elasticity.

A "film-former" is a substance which in solution in a solvent such as water, ethanol, etc. and following application to a substrate, for example, and evaporation of the solvent is able to form a film. Film forming may proceed by way, for example, of the formation of a gel.

In a particularly preferred embodiment of the invention the support for the food color or colors is xanthan, pectin, carrageenan, gum arabic or alginate. Xanthan is an extracellular heteropolysaccharide of Xanthomonas campestris which contains the individual units D-glucose, D-mannose and D-glucuronic acid in a ratio of 2.8:2.0:2.0. Xanthan additionally contains about 5% of acetyl groups and 3% of pyruvyl groups. Pectins are substances which are widespread primarily in higher plants. The principal individual unit present in pectins is D-galacuronic acid, with secondary constituents including L-rhamnose, D-galactose, L-arabinose and D-xylose. Carrageenan comprises a group of polysaccharides which are present in a number of red algae. Carrageenan resembles agar(-agar) in terms of chemical structure. Gum arabic is the dried exudate of various species of acacia, its principal constituents being L-arabinose, L-rhamnose, D-galactose and D-glucuronic acid. It is a branched polysaccharide whose major moiety is composed of β-(1,3)-branched D-galactopyranose units. Alginates are the salts of alginic acid, which comprises polysaccharides containing acidic carboxy groups and having an Mᵣ of approximately 200 000. Alginates consist primarily of D-mannuronic acid and L-guluronic acid in different proportions, joined to one another by 1-4-glycosidic linkages.

In the context of the present invention a "food color" is a substance which is used in the production of foods for the purpose of color correction or in order to produce an appealing aspect. Food colors therefore contribute considerably to the acceptance of foods. Food colors may be of either natural or synthetic origin. The natural food colors include dyes of plant origin, examples being carotenoids, flavonoids and anthocyanins, dyes of animal origin, such as cochineal, and inorganic pigments such as titanium dioxide, iron oxide pigments and iron hydroxide pigments. The food colors also include enzymatic browning products such as polyphenols, non-enzymatic browning products such as melanoidins, and also products of heating, such as caramel colors and caramels. The synthetic food colors include in particular azo compounds, triphenylmethane compounds, indigoid compounds, xanthene compounds and quinoline compounds.

In accordance with the invention the food color can be a natural or synthetic colorant. A preferred colorant in accordance with the invention is chlorophyll, a chlorophyllin, carmine, allura red, β-carotene, a riboflavin, an anthocyanin, betanin, erythrosin, indigo carmine, tartrazine or titanium oxide.

In accordance with the invention, of course, the hard caramels of the invention may comprise two or more supported food colors, it being possible for the different food colors to be applied to one support material or else to different support materials.

In accordance with the invention the hard caramel comprising the supported food color may be either a sugar-free or a sugar-containing hard caramel.

In the context of the present invention "sugar and sugars respectively" comprehend products such as sucrose, purified crystalline sucrose, in the form for example of refined sugar, refined sugar in crystals, refined white sugar, white or half-white sugar, aqueous sucrose solutions, in the form for example of liquid sugar, aqueous solutions of sucrose partly inverted by hydrolysis, invert sugar, syrup or invert liquid sugar, for example, glucose syrup, dried glucose syrup, and dextrose with or without water of crystallization. The sugar-containing hard caramel of the invention is therefore a hard caramel whose sweetener comprises or consists of sucrose, invert liquid sugar, invert sugar syrup, glucose, glucose syrup, polydextrose or mixtures thereof. In addition to the above-mentioned sugars, sugar-containing hard caramels may of course also include sugar substitutes such as fructose, leucrose, sorbose, palatinose, condensed palatinose, hydrogenated condensed palatinose, fructooligosaccharides, lactitol, sorbitol, xylitol, mannitol, maltitol, erythritol, 6-O-α-D-glucopyranosyl-D-sorbitol (1,6-GPS), 1-O-a-D-glucopyranosyl-D-sorbitol (1,1-GPS), 1-O-α-D-glucopyranosyl-D-mannitol (1,1-GPM) or mixtures thereof.

In the context of the present invention a "sugar-free hard caramel" is a caramel comprising as sweeteners no sugars, in other words no sucrose, invert liquid sugar, invert sugar syrup, dextrose syrup or glucose syrup, but instead sugar substitutes. In a preferred embodiment of the invention the sugar-free hard caramel is a caramel containing, based on the dry weight, not more than 0.5% by weight of the above-mentioned sugars.

The term "sugar substitutes" embraces all substances apart from the aforementioned sugars that are used for sweetening foods. The term "sugar substitutes" embraces, for example, substances such as hydrogenated monosaccharide and disaccharide sugar alcohols, examples being lactitol, xylitol, sorbitol, mannitol, maltitol, isomalt, 1,6-GPS, 1,1-GPS and 1,1-GPM, and also fructose, leucrose, isomaltilose (palatinose), condensed palatinose, hydrogenated condensed palatinose and fructooligosaccharides. Preferably, therefore, the sugar-free hard caramels of the invention comprise or consist of, as their sweeteners, fructose, leucrose, palatinose, condensed palatinose, hydrogenated condensed palatinose, fructooligosaccharides, lactitol, sorbitol, xylitol, mannitol, maltitol, erythritol, 1,6-GPS, 1,1-GPS, 1,1-GPM or mixtures thereof.

One mixture of 1,6-GPS and 1,1-GPM used with preference is isomalt, in which 1,6-GPS and 1,1-GPM are present in equimolar or nearequimolar amounts. Sweeteners present in accordance with the invention in the sugar-free hard caramels of the invention may also comprise 1,6-GPS-enriched mixtures of 1,6-GPS and 1,1-GPM, and 1,1-GPM-enriched mixtures of 1,6-GPS and 1,1-GPM, especially the mixtures disclosed in DE 195 32 396 C2, the disclosure content of that document relating to the description and preparation of 1,6-GPS-enriched and 1,1-GPM-enriched sweetener mixtures being incorporated in its entirety into the disclosure content of the present teaching. In accordance with the invention it is also possible to use 1,1-GPS-containing mixtures of 1,6-GPS and 1,1-GPM as sweeteners, particularly the mixtures disclosed in EP 0 625 578 B1, the disclosure content of that document relating to the description and preparation of 1,1-GPS-, 1,6-GPS- and 1,1-GPM-containing sweetener mixtures being incorporated in its entirety into the disclosure content of the present teaching.

In a preferred embodiment the hard caramel base of the hard caramel is transparent. Naturally the invention also provides for the transparent hard caramel base of the hard caramel to be colored with one or more colors, examples being chlorophyll, a chlorophyllin, carmine, alura red, β-carotene, a riboflavin, an anthocyanin, betanin, erythrosin, indigo carmine and/or tartrazine, the food color not being in supported form and the coloring of the hard caramel mass being very homogeneous. Thus the hard caramel base may be homogeneously colored by means of one of the above-mentioned colors, a chlorophyllin for example. A supported color, such as support particles colored with alura red, is then incorporated into this homogeneously colored hard caramel base.

In another preferred embodiment the substantially transparent hard caramel base may further comprise color pigments which are not supported and are not homogeneously distributed in the hard caramel base.

Likewise in accordance with the invention the hard caramel base may comprise, further to the aforementioned sugars and/or sugar substitutes, one or more intensive sweeteners. Intensive sweeteners are compounds which have a low or even negligibly small nutritive value but are notable for an intensive sweet taste. In accordance with the invention, in particular, the intensive sweetener is cyclamate, sodium cyclamate for example, saccharin, aspartame, glycyrrhizin, neohesperidine dihydrochalcone, thaumatin, monellin, acesulfame, alitame or sucralose.

Of course, in accordance with the invention, the hard caramel also comprise aromas and flavors. Examples of such substances are essential oils, synthetic aromas or mixtures thereof, examples being oils from plants or fruits such as citrus oil, fruit essences, peppermint oil, clove oil, aniseed, crystalline acids, menthol, eucalyptus, etc., or comprise these substances. The hard caramels of the invention may further comprise additional additives, an example being sodium bicarbonate.

In a further preferred embodiment the hard caramels of the invention further comprise at least one active medicinal substance, such as dextromethorphan, hexylresorcinol/menthol, phenylpropanolamine, dyclonine, menthol eucalyptus, benzocaine or cetylpyridinium.

The hard caramels of the invention may be in either filled or unfilled form. The hard caramels of the invention can of course likewise be in pan-coated or non-pan-coated form.

The present invention solves the technical problem on which it is based additionally by means of a process for producing a hard caramel of the invention which comprises at least one food color applied to a support and inhomogeneously distributed in the hard caramel base, said process comprising
a) contacting at least one support of at least one food color, so that the support is colored,
b) drying the colored support,
c) adding the dried colored support to a melt of a hard caramel base at a temperature from 80°C to 150°C, and
d) forming a hard caramel from the melt of the hard caramel base that comprises the colored support.

In a preferred embodiment of the process of the invention an aqueous solution, dispersion or suspension of the support is contacted with the food color. After the support has been contacted and colored with the food color, the colored support is dried in particular at a temperature which is above room temperature, preferably at a temperature of 50°C to 100°C, more preferably 70°C. Subsequently the dried colored support is comminuted to particles of the desired size using suitable means, a mortar and pestle for example, and these particles are then added to the hard caramel melt. The forming of the hard caramels of the invention may take place in accordance with the methods normally used for hard caramel production, such as by casting or stamping, for example.

The process of the invention therefore provides that the hard caramels of the invention can be produced in batches, continuously or by melt extrusion. For example, the hard caramel base can be prepared by boiling a sweetener or sweeteners mixture with water for a sufficiently long period at a temperature of 140°C to 200°C in a confectioner's cooker, under vacuum if desired. After the mass has cooled to temperatures of about 125°C to 130°C the colored and dried supported food colors can be added to and/or incorporated into the melt while it is still hot. Aromas and edible acids, and possibly further sweeteners too, can likewise be added in this temperature range, in particular at temperatures of about 100°C to 120°C. The mass is subsequently cast or stamped to form candies, and cooled further. Alternatively the hard caramels can be produced on a continuous cooking line. A further alternative allows the hard caramels to be produced by means of the melt extrusion process, although in that case no water is added.

After the hard caramels have been produced they can be pan-coated, a procedure for which it is possible to employ pan-coating methods that are normally employed. For example, the finished caramels can be subjected to soft pan-coating, hard pan-coating or suspension pan-coating. Soft pan-coating is the application of saccharides dissolved in water to moving cores, with saccharide powder being scattered after each application in order to bind the moisture. This type of pan-coating produces a soft pan-coating covering. In hard pan-coating, as with soft pan-coating, saccharides dissolved in water are applied to moving cores, although in this case no saccharide powder is applied; instead, the nonaqueous constituents are dried on immediately. As with soft pan-coatirig, a multiplicity of different individual applications are made, between which drying is carried out with hot or cold air, thereby allowing pan-coated coverings of different thickness to be produced. The hard pan-coating process can also be carried out with two or more different saccharide solutions applied in succession. In the case of suspension pan-coating, the suspended mixture is composed of a liquid phase, comprising for example sugar, rice starch and glucose in solution in water as well as of a solid phase, composed in turn of fine crystalline sugar pieces. The characteristic of this kind of suspension pan-coating is the separate use of different saccharides.

The present invention is illustrated by the following example.

### Example: Production of isomalt hard caramels comprising supported color pigments

First of all a 50% gum arabic solution was prepared. This was colored with food color, observing the manufacturers' metering instructions. The food colors used were carmine (purple/dark red; Dr. Marcus), copper chlorophyllin (green; Dr. Marcus) and alura red (Dr. Marcus). The colored solutions were subsequently poured separately onto aluminum trays and spread uniformly on the trays. The trays were then placed in a heating cabinet at 70°C for five to six hours. After drying, the dried and colored gum arabic chips were detached from the tray and then comminuted using a mortar and pestle to form particles of desired size.

Using isomalt, a hard caramel melt was prepared in pans, the melt being boiled at a temperature of 165°C. Thereafter the melt was cooled to a temperature of 125°C to 130°C and then the colored gum arabic particles or colored gum arabic chips were stirred in. Here it was found that the chips or particles no longer dissolve in the hot isomalt melt. Thereafter the melt was poured into candy molds. In the hard caramels cast in this way the colored gum arabic particles or colored gum arabic chips can be seen as separate pigment regions or pigments, which stand out markedly from the hard caramel base.

## Claims

1. A hard caramel comprising a hard caramel base and at least one food color applied to a support, the supported food color being inhomogeneously distributed in the hard caramel base.

2. The hard caramel as claimed in claim 1, wherein the supported food color in the hard caramel forms regions which can be delimited three-dimensionally and colorwise from the hard caramel base.

3. The hard caramel as claimed in claim 1 or 2, which is a sugar-free or sugar-containing hard caramel.

4. The hard caramel as claimed in claim 3, wherein the hard caramel base of the sugar-containing hard caramel consists of or comprises sucrose, invert liquid sugar, invert sugar syrup, glucose, glucose syrup, polydextrose or mixtures thereof.

5. The hard caramel as claimed in claim 4, wherein a hard caramel base of the sugar-containing hard caramel further comprises fructose, leucrose, palatinose, condensed palatinose, hydrogenated condensed palatinose, fructooligosaccharides, lactitol, sorbitol, xylitol, mannitol, maltitol, erythritol, 6-O-α-D-glucopyranosyl-D-sorbitol (1,6-GPS), 1-O-α-D-glucopyranosyl-D-sorbitol (1,1-GPS), 1-O-α-D-glucopyranosyl-D-mannitol (1,1-GPM) or mixtures thereof.

6. The hard caramel as claimed in claim 3, wherein the hard caramel base of the sugar-free hard caramel consists of or comprises fructose, leucrose, palatinose, condensed palatinose, hydrogenated condensed palatinose, fructooligosaccharides, lactitol, sorbitol, xylitol, mannitol, maltitol, erythritol, 1,6-GPS, 1,1-GPS, 1,1-GPM or mixtures thereof.

7. The hard caramel as claimed in claim 5 or 6, wherein the mixtures are selected from the group consisting of an equimolar or nearequimolar mixture of 1,6-GPS and 1,1-GPM (isomalt), a mixture of 1,6-GPS, 1,1-GPS and 1,1-GPM, a 1,6-GPS-enriched mixture of 1,6-GPS and 1,1-GPM, and a 1,1-GPM-enriched mixture of 1,6-GPS and 1,1-GPM.

8. The hard caramel as claimed in any one of claims 1 to 7, wherein the support is a water-swellable substance.

9. The hard caramel as claimed in claim 8, wherein the water-swellable substance is a dried thickener or a film-former.

10. The hard caramel as claimed in claim 8 or 9, wherein the support is xanthan, pectin, carrageenan, gum arabic or alginate.

11. The hard caramel as claimed in any one of claims 1 to 10, wherein the food color is a natural or synthetic colorant.

12. The hard caramel as claimed in claim 11, wherein the colorant is chlorophyll, a chlorophyllin, carmine, alura red, β-carotene, a riboflavin, an anthocyanin, betanin, erythrosin, indigo carmine, tartrazine or titanium dioxide.

13. The hard caramel as claimed in any one of Claims 1 to 12, wherein the hard caramel base of the hard caramel is transparent.

14. The hard caramel as claimed in any one of claims 1 to 13, wherein the hard caramel base of the hard caramel is homogenously colored by means of one or more colorants, examples being chlorophyll, a chlorophyllin, carmine, alura red, β-carotene, a riboflavin, an anthocyanin, betanin, erythrosin, indigo carmine and/or tartrazine.

15. The hard caramel as claimed in any one of claims 1 to 14, wherein the hard caramel base further comprises unsupported color pigments.

16. The hard caramel as claimed in any one of claims 1 to 15, wherein the hard caramel base further comprises one or more intensive sweeteners.

17. The hard caramel as claimed in claim 16, wherein the intensive sweetener is cyclamate, saccharin, aspartame, glycyrrhizin, neohesperidine dihydrochalcone, thaumatin, monellin, acesulfame, alitame or sucralose.

18. The hard caramel as claimed in any one of claims 1 to 17, comprising aromas and flavors.

19. The hard caramel as claimed in claim 18, wherein the aromas and flavors are essential oils, synthetic aromas, fruit essences, eucalyptus, peppermint oil, menthol and crystalline acids.

20. The hard caramel as claimed in any one of claims 1 to 19, comprising further additives such as sodium bicarbonate.

21. The hard caramel as claimed in any one of claims 1 to 20, further comprising at least one active medicinal substance, such as dextromethorphan, hexylresorcinol/menthol, phenylpropanolamine, dyclonine, menthol eucalyptus, benzocaine or cetylpyridinium.

22. The hard caramel as claimed in any one of claims 1 to 21, which is filled or unfilled.

23. The hard caramel as claimed in any one of claims 1 to 22, which is pan-coated or non-pan-coated.

24. A process for producing a hard caramel as claimed in any one of claims 1 to 23, comprising
a) contacting at least one support with at least one food color, so that the support is colored,
b) drying the colored support,
c) adding the dried colored support to a melt of a hard caramel base at a temperature from 80°C to 150°C, and
d) forming a hard caramel from the melt of the hard caramel base that comprises the colored support.

25. The process as claimed in claim 24, wherein an aqueous solution, dispersion or suspension of the support is contacted with the food color.

26. The process as claimed in claim 24 or 25, wherein after it has been contacted and colored with the food color the support is dried at a temperature above room temperature.

27. The process as claimed in claim 26, wherein drying is carried out at a temperature of 50°C to 100°C, preferably 70°C.

28. The process as claimed in any one of claims 24 to 27, wherein after the colored support has been dried it is comminuted to form particles of desired size.

29. The process as claimed in any one of claims 24 to 28, wherein the hard caramel is formed by casting or stamping.

## Patentansprüche

1. Hartkaramelle, umfassend eine Hartkaramellengrundmasse und mindestens einen auf einem Träger aufgebrachten Lebensmittelfarbstoff, wobei der geträgerte Lebensmittelfarbstoff in der Hartkaramellengrundmasse inhomogen verteilt ist.

2. Hartkaramelle nach Anspruch 1, wobei der geträgerte Lebensmittelfarbstoff in der Hartkaramelle von der Hartkaramellengrundmasse farblich und räumlich abgrenzbare Bereiche ausbildet.

3. Hartkaramelle nach Anspruch 1 oder 2, wobei die Hartkaramelle eine zuckerfreie oder zuckerhaltige Hartkaramelle ist.

4. Hartkaramelle nach Anspruch 3, wobei die Hartkaramellengrundmasse der zuckerhaltigen Hartkaramelle Saccharose, Invertflüssigzucker, Invertzuckersirup, Glucose, Glucose-Sirup, Polydextrose oder Gemische davon enthält oder daraus besteht.

5. Hartkaramelle nach Anspruch 4, wobei die Hartkaramellengrundmasse der zuckerhaltigen Hartkaramelle zusätzlich Fructose, Leucrose, Palatinose, kondensierte Palatinose, hydrierte kondensierte Palatinose, Fructooligosaccharide, Lactit, Sorbit, Xylit, Mannit, Maltit, Erythrit, 6-O-a-D-Glucopyranosyl-D-sorbit (1,6-GPS), 1-O-a-D-Glucopyranosyl-D-sorbit (1,1-GPS), 1-O-a-D-Glucopyranosyl-D-mannit (1,1-GPM) oder Gemische davon enthält.

6. Hartkaramelle nach Anspruch 3, wobei die Hartkaramellengrundmasse der zuckerfreien Hartkaramelle Fructose, Leucrose, Palatinose, kondensierte Palatinose, hydrierte kondensierte Palatinose, Fruc-tooligosaccharide, Lactit, Sorbit, Xylit, Mannit, Maltit, Erythrit, 1,6-GPS, 1,1-GPS, 1,1-GPM oder Gemische davon enthält oder daraus besteht.

7. Hartkaramelle nach Anspruch 5 oder 6, wobei die Gemische ausgewählt sind aus der Gruppe bestehend aus einem äquimolaren oder nahezu äquimolaren Gemisch von 1,6-GPS und 1,1-GPM (Isomalt), einem Gemisch aus 1,6-GPS, 1,1-GPS und 1,1-GPM, einem 1,6-GPSangereichertem Gemisch aus 1,6-GPS und 1,1-GPM sowie einem 1,1-GPM-angereichertem Gemisch aus 1,6-GPS und 1,1-GPM.

8. Hartkaramelle nach einem der Ansprüche 1 bis 7, wobei der Träger eine in Wasser quellbare Substanz ist.

9. Hartkaramelle nach Anspruch 8, wobei die in Wasser quellbare Substanz ein getrocknetes Verdickungsmittel oder ein Filmbildner ist.

10. Hartkaramelle nach Anspruch 8 oder 9, wobei der Träger Xanthan, Pektin, Carrageen, Gummi arabicum oder Alginat ist.

11. Hartkaramelle nach einem der Ansprüche 1 bis 10, wobei der Lebensmittelfarbstoff ein natürlicher oder synthetischer Farbstoff ist.

12. Hartkaramelle nach Anspruch 11, wobei der Farbstoff Chlorophyll, ein Chlorophyllin, Karminrot, Alurarot, b-Karotin, ein Riboflavin, ein Anthocyan, Betanin, Erythrosin, Indigokarmin, Tartrazin oder Titandioxid ist.

13. Hartkaramelle nach einem der Ansprüche 1 bis 12, wobei die Hartkaramellengrundmasse der Hartkaramelle transparent ist.

14. Hartkaramelle nach einem der Ansprüche 1 bis 13, wobei die Hartkaramellengrundmasse der Hartkaramelle mittels eines oder mehrerer Farbstoffe, beispielsweise Chlorophyll, eines Chlorophyllins, Karminrot, Alurarot, b-Karotin, eines Riboflavins, eines Anthocyans, Betanin, Erythrosin, Indigokarmin und/oder Tartrazin, homogen gefärbt ist.

15. Hartkaramelle nach einem der Ansprüche 1 bis 14, wobei die Hartkaramellengrundmasse zusätzlich ungeträgerte Farbpigmente enthält.

16. Hartkaramelle nach einem der Ansprüche 1 bis 15, wobei die Hartkaramellengrundmasse zusätzlich einen oder mehrere Intensivsüßstoffe enthält.

17. Hartkaramelle nach Anspruch 16, wobei der Intensivsüßstoff Cyclamat, Saccharin, Aspartam, Glycyrrhizin, Neohesperidin-Dihydrochalcon, Thaumatin, Monellin, Acesulfam, Alitam oder Sucralose ist.

18. Hartkaramelle nach einem der Ansprüche 1 bis 17, wobei die Hartkaramelle Aroma- und Geschmacksstoffe enthält.

19. Hartkaramelle nach Anspruch 18, wobei die Aroma- und Geschmacksstoffe ätherische Öle, synthetische Aromen, Fruchtessenzen, Eukalyptus, Pfefferminzöl, Menthol und kristalline Säuren sind.

20. Hartkaramelle nach einem der Ansprüche 1 bis 19, wobei die Hartkaramelle weitere Zusatzstoffe wie Natriumbicarbonat enthält.

21. Hartkaramelle nach einem der Ansprüche 1 bis 20, wobei die Hartkaramelle zusätzlich mindestens einen medizinischen Wirkstoff, beispielsweise Dextromethorphan, Hexylresorcin/Menthol, Phenylpropanolamin, Dyclonin, Mentholeukalyptus, Benzocain oder Cetylpyridinium enthält.

22. Hartkaramelle nach einem der Ansprüche 1 bis 21, wobei die Hartkaramelle gefüllt oder ungefüllt ist.

23. Hartkaramelle nach einem der Ansprüche 1 bis 22, wobei die Hartkaramelle dragiert oder undragiert ist.

24. Verfahren zur Herstellung einer Hartkaramelle nach einem der Ansprüche 1 bis 23, umfassend
a) Inkontaktbringen von mindestens einem Träger mit mindestens einem Lebensmittelfarbstoff, so dass der Träger gefärbt wird,
b) Trocknen des gefärbten Trägers,
c) Zugabe des getrockneten gefärbten Trägers zu einer Schmelze einer Hartkaramellengrundmasse bei einer Temperatur von 80°C bis 150°C und
d) Formen einer Hartkaramelle aus der den gefärbten Träger enthaltenden Schmelze der Hartkaramellengrundmasse.

25. Verfahren nach Anspruch 24, wobei eine wässrige Lösung, Dispersion oder Suspension des Trägers mit dem Lebensmittelfarbstoff in Kontakt gebracht wird.

26. Verfahren nach Anspruch 24 oder 25, wobei der Träger nach dem Inkontaktbringen und Färben mit dem Lebensmittelfarbstoff bei einer über der Raumtemperatur liegenden Temperatur getrocknet wird.

27. Verfahren nach Anspruch 26, wobei die Trocknung bei einer Temperatur von 50°C bis 100°C, vorzugsweise 70°C, getrocknet wird.

28. Verfahren nach einem der Ansprüche 24 bis 27, wobei der gefärbte Träger nach dem Trocknen zu Partikeln gewünschter Größe zerkleinert wird.

29. Verfahren nach einem der Ansprüche 24 bis 28, wobei das Formen der Hartkaramelle mittels Gießen oder Prägen erfolgt.

## Revendications

1. Caramel dur comprenant une base de caramel dur et au moins un colorant alimentaire appliqué sur un support, le colorant alimentaire associé au support étant distribué de manière non homogène dans la base de caramel dur.

2. Caramel dur selon la revendication 1, dans lequel le colorant alimentaire associé au support dans le caramel dur forme des régions que l'on peut délimiter tridimensionnellement et sur le plan des couleurs, de la base de caramel dur.

3. Caramel dur selon la revendication 1 ou 2, le caramel dur étant sans sucre ou contenant du sucre.

4. Caramel dur selon la revendication 3, dans lequel la base de caramel dur du caramel dur qui contient du sucre se compose de, ou comprend du sucrose, du sucre liquide inverti, du sirop de sucre inverti, du glucose, du sirop de glucose, du polydextrose ou des mélanges de ceux-ci.

5. Caramel dur selon la revendication 4, dans lequel la base de caramel dur du caramel dur qui contient du sucre comprend en outre du fructose, du leucrose, du palatinose, du palatinose condensé, du palatinose hydrogéné condensé, des fructooligosaccharides, du lactitol, du sorbitol, du xylitol, du mannitol, du maltitol, de l'érythritol, du 6-O-a-D-glucopyranosyl-D-sorbitol (1,6-GPS), du 1-O-α-D-glucopyranosyl-D-sorbitol (1,1-GPS), du 1-O-α-D-glucopyranosyl-D-mannitol (1,1-GPM) ou des mélanges de ceux-ci.

6. Caramel dur selon la revendication 3, dans lequel la base de caramel dur du caramel dur sans sucre se compose de, ou comprend du fructose, du leucrose, du palatinose, du palatinose condensé, du palatinose hydrogéné condensé, des fructooligosaccharides, du lactitol, du sorbitol, du xylitol, du mannitol, du maltitol, de l'érythritol, du 1,6-GPS, du 1,1-GPS, du 1,1-GPM, ou des mélanges de ceux-ci.

7. Caramel dur selon la revendication 5 ou 6, dans lequel les mélanges sont choisis parmi le groupe comprenant un mélange équimolaire ou quasi équimolaire de 1,6-GPS et de 1,1-GPM (isomalt), un mélange de 1,6-GPS, de 1,1-GPS et de 1,1-GPM, un mélange de 1,6-GPS et de 1,1-GPM enrichi en 1,6-GPS et un mélange de 1,6-GPS et de 1,1-GPM enrichi en 1,1-GPM.

8. Caramel dur selon l'une quelconque des revendications 1 à 7, dans lequel le support est une substance susceptible de gonfler dans l'eau.

9. Caramel dur selon la revendication 8, dans lequel la substance susceptible de gonfler dans l'eau est un épaississant séché ou un filmogène.

10. Caramel dur selon la revendication 8 ou 9, dans lequel le support est du xanthane, de la pectine, de la carraghénine, de la gomme arabique ou de l'alginate.

11. Caramel dur selon l'une quelconque des revendications 1 à 10, dans lequel le colorant alimentaire est un colorant naturel ou synthétique.

12. Caramel dur selon la revendication 11, dans lequel le colorant est la chlorophylle, une chlorophylline, le carmin, le rouge allura, le β-carotène, une riboflavine, une anthocyane, la bétanine, l'érythrosine, le carmin d'indigo, la tartrazine ou le dioxyde de titane.

13. Caramel dur selon l'une quelconque des revendications 1 à 12, dans lequel la base de caramel dur du caramel dur est transparente.

14. Caramel dur selon l'une quelconque des revendications 1 à 13, dans lequel la base de caramel dur du caramel dur est colorée de manière homogène au moyen d'un ou plusieurs colorants, par exemple la chlorophylle, une chlorophylline, le carmin, le rouge allura, te β-carotène, une riboflavine, une anthocyane, la bétanine, l'érythrosine, le carmin d'indigo et/ou la tartrazine.

15. Caramel dur selon l'une quelconque des revendications 1 à 14, dans lequel la base de caramel dur comprend en outre des pigments colorés non associés à des supports.

16. Caramel dur selon l'une quelconque des revendications 1 à 15, dans lequel la base de caramel dur comprend en outre un ou plusieurs édulcorants intenses.

17. Caramel dur selon la revendication 16, dans lequel l'édulcorant intense est le cyclamate, la saccharine, l'aspartame, la glycyrrhizine, le dihydrochalcone de néohespéridine, la thaumatine, la monelline, l'acésulfame, l'alitame ou le sucralose.

18. Caramel dur selon l'une quelconque des revendications 1 à 17, comprenant des arômes et des parfums.

19. Caramel dur selon la revendication 18, dans lequel les arômes et les parfums sont des huiles essentielles, des arômes de synthèse, des essences de fruits, l'eucalyptus, l'huile de menthe poivrée, le menthol et des acides cristallins.

20. Caramel dur selon l'une quelconque des revendications 1 à 19, comprenant des additifs supplémentaires tels que le bicarbonate de sodium.

21. Caramel dur selon l'une quelconque des revendications 1 à 20, comprenant en outre au moins une substance médicinale active, telle que le dextrométhorphane, l'hexylrésorcinol/menthol, la phénylpropanolamine, la dyclonine, le menthol, l'eucalyptus, la benzocaïne ou le cétylpyridinium.

22. Caramel dur selon l'une quelconque des revendications 1 à 21, qui est fourré ou non fourré.

23. Caramel dur selon l'une quelconque des revendications 1 à 22, qui est enrobé en turbine ou non.

24. Procédé de production d'un caramel dur selon l'une quelconque des revendications 1 à 23, comprenant
a) la mise en contact d'au moins un support avec au moins un colorant alimentaire, de manière à colorer le support,
b) le séchage du support coloré,
c) l'ajout du support coloré séché à un bain fondu d'une base de caramel dur à une température de 80°C à 150°C, et
d) la formation d'un caramel dur à partir du bain fondu de la base de caramel dur qui comprend le support coloré.

25. Procédé selon la revendication 24, dans lequel on met en contact une solution, dispersion ou suspension aqueuse du support avec le colorant alimentaire.

26. Procédé selon la revendication 24 ou 25, dans lequel on sèche le support à une température supérieure à la température ambiante, après sa mise en contact et sa coloration avec le colorant alimentaire.

27. Procédé selon la revendication 26, dans lequel on effectue le séchage à une température de 50°C à 100°C, de préférence de 70°C.

28. Procédé selon l'une quelconque des revendications 24 à 27, dans lequel on réduit le support coloré après son séchage afin de former des particules de la dimension souhaitée.

29. Procédé selon l'une quelconque des revendications 24 à 28, dans lequel on forme le caramel dur par coulage ou estampage.
